# EUROPÄISCHE PATENTSCHRIFT

(11) **EP 2 307 179 B1**
(45) Veröffentlichungstag und Bekanntmachung des Hinweises auf die Patenterteilung: **06.06.2012**
(21) Anmeldenummer: 09779221.2
(22) Anmeldetag: 30.03.2009
(51) Int. Cl.: B29B 17/02

(54) **VERFAHREN ZUR TRENNUNG VON UNVULKANISIERTEM GUMMIERTEM STAHLCORD-MATERIAL FÜR REIFEN**
METHOD FOR SEPARATING UNVULCANIZED RUBBERIZED STEEL CHORD MATERIAL FOR TIRES
PROCÉDÉ DE SÉPARATION DE MATÉRIAUX DE CÂBLES D'ACIER CAOUTCHOUTÉS MAIS NON VULCANISÉS DE BANDAGES DE ROUE

(30) Priorität: 31.07.2008 DE 102008035963
(43) Veröffentlichungstag der Anmeldung: 13.04.2011
(60) Teilanmeldung: 11161604.1
(73) Patentinhaber: Continental Reifen Deutschland GmbH, 30165 Hannover (DE)
(72) Erfinder: THEUSNER, Martin, 30989 Gehrden (DE)
(74) Vertreter: Finger, Karsten
(86) Internationale Anmeldenummer: PCT/EP2009/053725
(87) Internationale Veröffentlichungsnummer: WO 2010/012512

(56) Entgegenhaltungen:
- EP-A- 1 344 566
- DE-A1-102005 033 734
- JP-A- 2001 226 519
- DROZDOVSKII V F: "GRINDING OF RUBBER-CONTAINING WASTE MATERIALS AND PROPERTIES OF COMMUNUTED VULCANISATES" INTERNATIONAL POLYMER SCIENCE AND TECHNOLOGY, RAPRA TECHNOLOGY, SHREWABURY, GB, Bd. 20, Nr. 8, 1. Januar 1993 (1993-01-01), Seiten T64-T70, XP000413778 ISSN: 0307-174X

## Beschreibung

Die Erfindung betrifft ein Verfahren zur Trennung von unvulkanisiertem gummierten Stahlcord-Material für Reifen.

In der Reifenproduktion fallen weltweit bei allen Reifenherstellern gummierte Stahlcordabfälle sowie Reifenrohlinge und Karkassen an, die bisher entweder in Deponien entsorgt oder zu einem geringen Anteil mit Schreddern zerkleinert und in der Zementindustrie zusammen mit anderen Abfällen energetisch genutzt werden. Alle Reifenhersteller haben das Problem der Entsorgung oder eines Recyclings der unvulkanisierten Stahlcordabfälle sowie Reifenrohlinge und Karkassen.
Der Stand der Technik ist heute hauptsächlich die Deponierung und darüber hinaus das Zerkleinern kleinerer Mengen von gummierten Stahlcordabfällen mit anschließender energetischer Nutzung in der Zementindustrie. Die Zerkleinerung in Shreddem hat wegen der großen Festigkeit des Stahlcordes einen sehr großen Verschleiß der Shreddermesser zur Folge, was den Prozess sehr teuer macht, außerdem können sich die Stahlcorde sehr leicht in die Shreddervorrichtungen einwickeln, was Betriebsstörungen zur Folge hat.
Die DE102005033734A1 offenbart ein Verfahren zum Trennen von Gummi-Verbundwerkstoffen. Dabei wird dem Trennungsprozess eine Vorrichtung zum vorherigen Bestäuben mit einem Trennmittel und zum Zerschneiden der Reifencords vorgeschaltet. Die EP1344566A offenbart ebenfalls ein Verfahren zum Trennen von Abfallprodukten. Dabei handelt es sich allerdings um eine Vielzahl unterschiedlicher Abfälle, wie zum Beispiel bei der Entsorgung von Autowracks.
Die US5411213 offenbart ein Verfahren zum Trennen von Abfallprodukten.

Die Publikationen "Natur- und Synthesekautschuk sowie vulkanisierte Abfälle wirkungsvoll zerkleinern" (Fachzeitschrift: Kunstoffe 80; 1990; 11) und "Material recycling of used tyres an rubber scrap" (Fachzeitschrift: International Polymer Science and Technology, Vol. 24, No. 7, 1997) offenbaren ebenfalls Verfahren zum Zerkleinem und Trennen von Gummimaterial.

Der Erfindung lag die Aufgabe zugrunde, ein Verfahren bereitzustellen, mit dem die Gummierung und das Stahlcord-Material auf einfache Weise voneinander getrennt werden.

Gelöst wird die Aufgabe durch ein Verfahren nach Anspruch 1.

Ein Vorteil der Erfindung ist insbesondere darin zu sehen, dass durch das erfindungsgemäße Verfahren unvulkanisierte Gummierung und Stahlcord-Material auf einfache Weise voneinander getrennt werden können. Die rotierenden Werkzeuge und das hinzugegebene Trennmittel bewirken eine effektive Trennung in abgetrennte Gummierungspartikel sowie in das entsprechende Stahlcord-Material. Das Trennmittel führt dabei zu einem Einhüllen der separierten Gummierungspartikel, die über eine Öffnung in der Trennvorrichtung auf einfache Weise abgeführt werden können. Das erfindungsgemäße Verfahren ermöglicht auf diese Weise eine großtechnische Trennung bzw. Recyceln von unvulkanisierten gummierten Stahlcordabfällen wie sie beispielsweise in der Reifenindustrie weltweit anfallen. Bei diesem Verfahren können große Mengen von Stahlcordabfällen in einem Arbeitsgang in Gummierung und Stahlcord getrennt und somit recycelt werden.

In einer weiteren vorteilhaften Weiterbildung der Erfindung ist vorgesehen, dass die Trennmittel Polyurethan-Pulver, Talkum, Kreide , Sägemchl oder andere pulverförmige Trennmittel sind , mit dem die abgetrennten Gummierungspartikel einhüllbar sind weil sie auf deren Oberfläche anhaften. Diese namentlich genannten Materialien haben sich bei Versuchen als besonders effektives Trennmittel herausgestellt. Talkum findet in der Reifenindustrie als als Antitack-Material" weite Anwendung. Dadurch wird ein Wiedereinsatz in der Reifenindustrie ermöglicht.

Es ist vorgesehen, dass das Trennmittel in einer Menge von bis zu 20 Gewichtsprozent des zu trennenden gummierten Stahlcord-Materials zur Trennvorrichtung hinzugegeben wird. Bei einem solchen Mischungsverhältnis wird eine effektive Trennung erzielt, wie Versuche ergeben haben.

Es ist vorgesehen, dass die rotierenden Werkzeuge Ketten sind. Rotierende Ketten sind besonders effektiv wirkende Zerspanungswerkzeuge. Weiterhin können die Ketten in Kombination mit Stahlstäben/-werkzeugen eingesetzt werden.

In einer weiteren vorteilhaften Weiterbildung der Erfindung ist vorgesehen, dass die Ketten mit einer Umdrehungszahl zwischen 350 und 750 Umdrehungen pro Minute rotieren. Bei diesen Umdrehungszahlen wird eine effektive Trennung zwischen dem Stahlcord-Material und der Gummierung durch das Vorliegen einer ausreichenden dynamischen Steifigkeit der Mischung erreicht. Dadurch splittert die Gummierung vom Stahlcord ab.

In einer weiteren vorteilhaften Weiterbildung der Erfindung ist vorgesehen, dass die Trennvorrichtung ein Trommelzerspaner ist. Bei einem derartigen Trommelzerspaner müssen nur noch wenige konstruktive Änderungen vorgenommen werden, um diesen effektiv für das erfindungsgemäße Verfahren einzusetzen.

In einer weiteren vorteilhaften Weiterbildung der Erfindung ist vorgesehen, dass das gummierte Stahlcordmaterial Ausschussmaterial ist, welches bei der Reifenherstellung anfällt. Die Reifenindustrie ist besonders daran interessiert, derartige Abfälle auf einfache Weise effektiv zu recyceln um eine Deponierung zu vermeiden.

In einer weiteren vorteilhaften Weiterbildung der Erfindung ist vorgesehen, dass das gummierte Stahlcordmaterial unzerkleinert zur Trennung in die Trennvorrichtung gegeben wird. Das unzerkleinerte gummierte Stahlcord-Material lässt sich effektiver voneinander trennen als das bei vorab zerkleinertem Stahlcord-Material der Fall ist, wie Versuche gezeigt haben.

In einer weiteren vorteilhaften Weiterbildung der Erfindung ist vorgesehen, dass das Stahlcordmaterial nach der Trennung von der Gummierung aus der Trennvorrichtung ausgeführt wird.

An einem Ausführungsbeispiel soll die Erfindung nachfolgend erläutert werden. Es zeigen:
- Fig. 1: eine schematische Darstellung des Verfahrens,
- Fig. 2: eine schematische Darstellung der Vorrichtung zur Durchführung des Verfahrens.

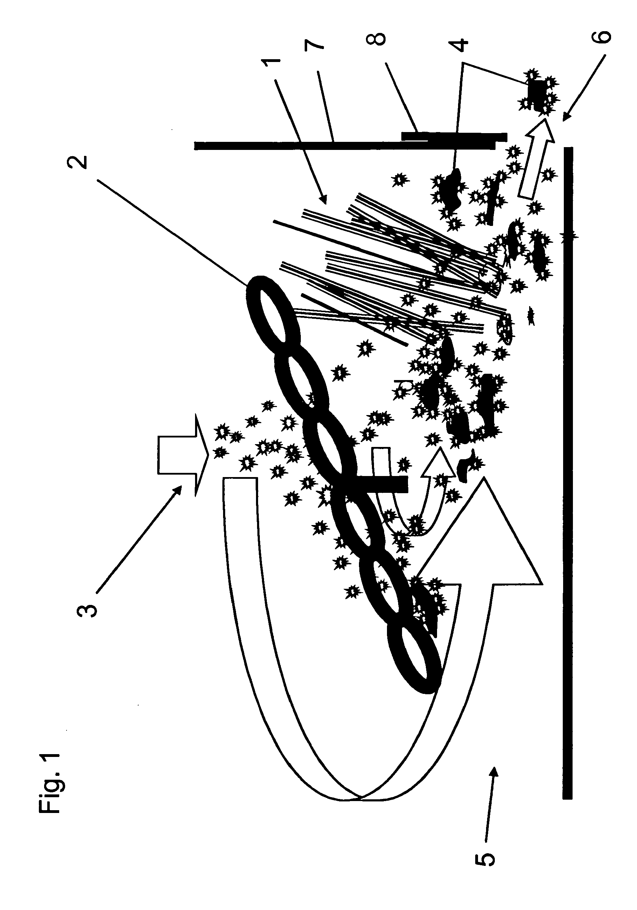

Die Fig. 1 zeigt eine schematische Darstellung des erfindungsgemäßen Verfahrens. Das gummierte Stahlcord-Material 1 wird über eine Öffnung in die Trommel 7 der Trennvorrichtung 5 eingeführt. Der Trennvorrichtung 5 wird ebenfalls das pulverförmige Trennmittel 3 hinzugegeben. Die schematisch dargestellten Ketten 2 rotieren mit einer hohen Rotationsgeschwindigkeit und führen dabei zu einer Zerspanung des gummierten Stahlcord-Materials 1. Bei dem Zerspanungsprozess wird das gummierte Stahlcord-Material 1 in mit Trennmittel eingehüllte Gummierungspartikel 4 sowie blankes Stahlcord-Material aufgetrennt. Das Trennmittel 3 wird in der Trommel 7 verwirbelt und hüllt die abgetrennten Gummierungspartikel ein. Die mit Trennmittel eingehüllten Gummierungspartikel 4 werden über die Öffnung 6 in der Trennvorrichtung herausgeführt, wobei diese Öffnung über eine Austrittsklappe 8 geöffnet wird. Nach dem Trennvorgang in der Trennvorrichtung 5 wird das blanke Stahlcord-Material aus der Trennvorrichtung (Trommelzerspaner) herausgeführt oder herausgenommen.

Bei den zu trennenden gummierten Stahlcorabfällen bzw. dem Stahlcordmaterial 1 handelt es sich um gummierte Stahlcorde sowie, wie sie in der Reifenindustrie als Karkass- und Gürtelmaterial eingesetzt werden. Die Gummierung ist im Gegensatz zu den bisher zur Zerkleinerung in der Recycling-Industrie eingesetzten Produkte bzw. Abfälle plastisch. Ein Zersplittern der Produkte bei Raumtemperatur, wie dies bei festen nichtplastischen Produkten der Fall ist, ist daher ausgeschlossen. Werden gummierte Stahlcordabfälle 1 in einem Verfahren gemäß Figur 1 hinzugegeben, so wird der Mischung unter der Einwirkung der Schläge der rotierenden Ketten 2 soviel Energie zugeführt, dass sie sich innerhalb von Sekunden so weit erwärmt, das sich ein mit Stahlcord durchsetzter weicher Mischungshaufen bzw. Klumpen bildet. Eine Trennung tritt dabei nicht ein.

Um eine Trennung zu erhalten, ist die Zugabe von pulverförmigen Trennmitteln 3 wie Polyurethan-Pulver, Talkum, Kreide, Sägemehl oder anderer pulverförmiger Trennmitteln, erforderlich, die die abgetrennten Gummierungspartikel einhüllen, wie sich bei Versuchen gezeigt hat.

Die einzusetzende Menge an Trennmittel kann bis zu 20 Gewichtsprozent des zu trennenden gummierten Stahlcordes betragen.

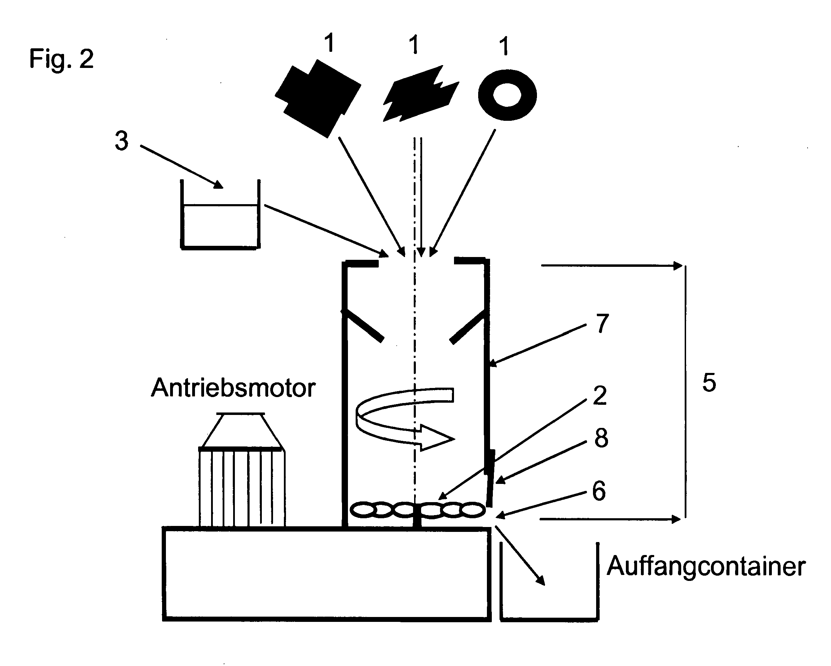

Als Trennvorrichtung ist vorteilhafterweise ein konventioneller Tommelzerspanner einzusetzen, wie er in Fig. 2 dargestellt ist.

Im Gegensatz zum Einsatz des Trommelzerspaners bei nichtplastischen Produkten, bei dem die Trennung der Bruchstücke erst außerhalb des Zerspaners in die einzelnen Rohstofffraktionen stattfindet, wird eine Trennung in Gummierung und Stahlcord bereits in der Trommel 7 erreicht. Der Zerspaner hat hier also die Funktion einer Trennanlage.

Der Trennmechanismus läuft in der Trennvorrichtung 5 im Speziellen wie folgt ab: Duch die Ketten 2 werden Mischungspartikel bzw. Gummierungspartikel vom Stahlcord auf Grund ihrer dynamischen Steifigkeit losgeschlagen. Wird kein pulverförmiges, in der Trommel 7 verwirbelungsfähiges Trennmittel 3 mit in die Trennvorrichtung 5 gegeben, verklumpen die Mischungspartikel entweder mit ebenfalls abgetrennten weiteren Mischungspartikeln unter der Einwirkung weiterer Kettenschläge oder die Mischungspartikel werden einzeln oder als Mischungsklumpen wieder auf den Stahlcord geschlagen. Ein Verklumpen der abgetrennten Mischungspartikel kann nur durch leicht in der Trommel zu verwirbelnde Trennmittel 3 erreicht werden, da diese die abgetrennten, herumwirbelnden Mischungspartikel allseitig einhüllen. Die mit Trennmittel 3 bedeckten Mischungspartikel bzw. Gummierungspartikel 4 treten dann unter der nur schlitzbreit geöffneten Austrittsklappe 8 aus der Trennvorrichtung 5 nach ca. 30-60 Sekunden aus. Diese werden in einer Box aufgefangen. Der nach ca. 1 Minute restlos von der Gummierung befreite blanke Stahlcord wird aus der Trennvorrichtung 5 herausgenommen oder an einer nicht dargestellten Öffnung der Trennvorrichtung 5 ausgeschleudert. Steinmehl oder andere Pulver mit hohem spezifischem Gewicht sind als Trennmittel wenig wirksam, da sie in der Kammer der Trennvorrichtung 5 nur wenig verwirbelt werden und vorwiegend auf dem Boden verbleiben, wie Versuche gezeigt haben.

Werden zerkleinerte ca. handtellergroße Stahlcordabfälle im Trommelzerspaner eingesetzt, tritt keine oder nur eine unzureichende Trennung in die Einzelkomponenten ein. Der Schlagwiderstand der zerkleinerten Stahlcordabfälle ist zur Abtennung der Gummierung zu gering, da diese in der Trommel 7 herumgewirbelt werden und so den Ketten 2 und damit einem Impuls ausweichen können.

Die Figur 2 zeigt einen Trommelzerspaner, wie er vorteilhafterweise für das erfindungsgemäße Verfahren eingesetzt werden kann. In der Trommel 7 des Trommelzerspaners sind die rotierenden Ketten 2 angeordnet, die mit einer hohen Umdrehungszahl rotieren und als Zerspanungswerkzeug benutzt werden. Der Antrieb erfolgt über den Antriebsmotor 10. Eine der beiden abgetrennten Fraktionen werden in dem Auffangcontainer 11 aufgefangen.

An dem dargestellen Trommelzerspaner 9 ist die zu öffnende Austrittsklappe 6 so zu vergrößern, so dass der unter den Schlägen der Ketten 2 zusammengeballte blanke Stahlcord austreten kann um ein automatisiertes Batch-Verfahren zu erhalten.

Das beschriebene Verfahren unter Anwendung eines pulverförmigen Trennmittels ist bisher nur bei unvulkanisierten, plastischen Stahlcordabfällen eingesetzt worden. Prinzipiell kann das Verfahren bei allen Verbundstoffen zu einer Trennung eingesetzt werden, bei denen metallische Träger mit einem plastischen Werkstoff als Bauteil kombiniert vorliegen.

### Bezugszeichenliste

- 1: gummiertes Stahlcordmaterial oder Reifenrohling
- 2: rotierende Ketten
- 3: pulverförmiges Trennmittel
- 4: mit Trennmittel eingehüllte Gummierungspartikel
- 5: Trennvorrichtung
- 6: Öffnung in der Trennvorrichtung
- 7: Trommel der Trennvorrichtung
- 8: Austrittsklappe
- 9: Trommelzerspaner
- 10: Antriebsmotor
- 11: Auffangcontainer

## Patentansprüche

1. Verfahren zur Trennung von unvulkanisierten gummierten Stahlcord-Material (1) mit folgenden Schritten:
- Zuführen von gummierten Stahlcord (1) in eine Trennvorrichtung (5),
- Zuführen von pulverförmigen Trennmittel (3) in die Trennvorrichtung (5),
wobei das Trennmittel (3) in einer Menge von bis zu 20 Gewichtsprozent des zu trennenden gummierten Stahlcord-Materials (1) zur Trennvorrichtung (5) hinzugegeben wird,
- wobei das pulverförmige Trennmittel (3) ein im Verhältnis zum Stahlcord-Material geringeres spezifisches Gewicht besitzt,
wobei das geringe spezifische Gewicht des Trennmittels eine einfache Verwirbelung des Trennmittels bewirkt,
wodurch der Trennprozess zwischen dem Stahlcord-Material und der Gummierung unterstützt wird,
- Trennung von Stahlcord und Gummierung durch das Zusammenwirken von rotierenden Werkzeugen (2) und dem Trennmittel (3) in der Trennvorrichtung (5), wobei das Trennmittel in der Trommel verwirbelt wird und
wobei die rotierenden Werkzeuge Ketten (2) sind,
- Einhüllen der abgetrennten Gummierungspartikel mit dem Trennmittel (3),
- Abführen der Gummierungspartikel (4) aus einer Öffnung (6) in der Trennvorrichtung (5).

2. Verfahren nach Anspruch 1,
**dadurch gekennzeichnet, dass**
die Trennmittel (3) Polyurethan-Pulver, Talkum, Kreide, Sägemehl oder andere pulverförmige Trennmittel sind, mit dem die abgetrennten Gummierungspartikel einhüllbar sind und das auf deren Oberfläche anhaftet,

3. Verfahren nach einem der vorhergehenden Ansprüche,
**dadurch gekennzeichnet, dass**
die Ketten (2) mit einer Umdrehungszahl zwischen 350 und 750 Umdrehungen pro Minute rotieren.

4. Verfahren nach einem der vorhergehenden Ansprüche,
**dadurch gekennzeichnet, dass**
die Trennvorrichtung ein Trommelzerspaner (9) ist.

5. Verfahren nach einem der vorhergehenden Ansprüche,
**dadurch gekennzeichnet, dass**
das gummierte Stahlcord-Material (1) Ausschussmaterial in Form von Stahlcordabfällen, Reifenrohlingen und Karkassen sind, welche bei der Reifenherstellung anfallen.

6. Verfahren nach einem der vorhergehenden Ansprüche,
**dadurch gekennzeichnet, dass**
das gummierte Stahlcord-Material (1) unzerkleinert zur Trennung in die Trennvorrichtung (5) gegeben wird.

7. Verfahren nach einem der vorhergehenden Ansprüche,
**dadurch gekennzeichnet, dass**
das Stahlcordmaterial nach der Trennung von der Gummierung aus der Trennvorrichtung (5) entnommen wird.

8. Verfahren nach einem der vorhergehenden Ansprüche,
**dadurch gekennzeichnet, dass**
das Stahlcord-Material (1) nach der Trennung von der Gummierung durch eine Öffnung in der Trennvorrichtung (5) herausgeführt wird.

## Claims

1. Process for separating unvulcanized rubberized steel cord material (1) with the following steps:
- introduction of rubberized steel cord (1) into a separation apparatus (5),
- introduction of pulverulent separator (3) into the separation apparatus (5),
where the amount of the separator (3) added to the separation apparatus (5) is up to 20 percent by weight of the rubberized steel cord material (1) requiring separation,
- where the pulverulent separator (3) has a density lower than that of the steel cord material,
where a result of the low density of the separator is that the separator is easily fluidized,
and this promotes the process of separation between the steel cord material and the rubberization,
- separation of steel cord and rubberization via the interaction of rotating tools (2) with the separator (3) in the separation apparatus (5), where the separator is fluidized in the drum and
where the rotating tools are chains (2),
- encapsulation of the separated rubberization particles with the separator (3),
- discharge of the rubberization particles (4) from an aperture (6) in the separation apparatus (5).

2. Process according to Claim 1,
**characterized in that**
the separators (3) are polyurethane powder, talc, chalk, sawdust or other pulverulent separators, which can encapsulate the separated rubberization particles and which adheres to their surface.

3. Process according to either of the preceding claims,
**characterized in that**
the chains (2) rotate at a rotation rate of from 350 to 750 revolutions per minute.

4. Process according to any of the preceding claims,
**characterized in that**
the separation apparatus is a drum chipper (9).

5. Process according to any of the preceding claims,
**characterized in that**
the rubberized steel cord material (1) is reject material in the form of steel cord waste, of green tires and of carcasses, where these have arisen during tire production.

6. Process according to any of the preceding claims,
**characterized in that**
for the separation process, the rubberized steel cord material (1) is added in uncomminuted form to the separation process in the separation apparatus (5).

7. Process according to any of the preceding claims,
**characterized in that**
the steel cord material is removed from the separation apparatus (5) after separation from the rubberization.

8. Process according to any of the preceding claims,
**characterized in that**
the steel cord material (1) is conducted out through an aperture in the separation apparatus (5) after separation from the rubberization.

## Revendications

1. Procédé pour la séparation de matériau (1) en fils métalliques caoutchoutés, non vulcanisé, présentant les étapes suivantes :
- introduction de fils métalliques caoutchoutés (1) dans un dispositif de séparation (5),
- introduction d'agent séparateur (3) sous forme de poudre dans le dispositif de séparation (5), l'agent séparateur (3) étant ajouté en une quantité allant jusqu'à 20% en poids du matériau (1) en fils métalliques caoutchoutés à séparer dans le dispositif de séparation (5),
- l'agent séparateur (3) sous forme de poudre présentant un poids spécifique inférieur par rapport au matériau en fils métalliques,
le faible poids spécifique de l'agent séparateur provoquant un tourbillonnement simple de l'agent séparateur,
suite à quoi le processus de séparation entre le matériau en fils métalliques et le caoutchouc étant soutenu,
- séparation des fils métalliques et du caoutchouc par l'interaction d'outils rotatifs (2) et de l'agent séparateur (3) dans le dispositif de séparation (5), l'agent séparateur étant mis en tourbillonnement dans le tambour et
les outils rotatifs étant des chaînes (2),
- enrobage des particules de caoutchouc séparées par l'agent séparateur (3),
- évacuation des particules de caoutchouc (4) via une ouverture (6) dans le dispositif de séparation (5).

2. Procédé selon la revendication 1, **caractérisé en ce que** l'agent séparateur (3) est une poudre de polyuréthane, le talc, la craie, la sciure ou d'autres agents séparateurs sous forme de poudre par lequel les particules de caoutchouc séparées peuvent être enrobées et qui adhère en leur surface.

3. Procédé selon l'une quelconque des revendications précédentes, **caractérisé en ce que** les chaînes (2) tournent à une vitesse de rotation entre 350 et 750 t/min.

4. Procédé selon l'une quelconque des revendications précédentes, **caractérisé en ce que** le dispositif de séparation est une déchiqueteuse à tambour (9).

5. Procédé selon l'une quelconque des revendications précédentes, **caractérisé en ce que** le matériau (1) en fils métalliques caoutchoutés est un matériau de rebut sous forme de déchets de fils métalliques, de préformes de pneus et de carcasses qui sont produits lors de la fabrication de pneus.

6. Procédé selon l'une quelconque des revendications précédentes, **caractérisé en ce que** le matériau (1) en fils métalliques caoutchoutés est introduit sans être broyé en vue de la séparation dans le dispositif de séparation (5).

7. Procédé selon l'une quelconque des revendications précédentes, **caractérisé en ce que** le matériau en fils métalliques est enlevé du dispositif de séparation (5) après la séparation du caoutchouc.

8. Procédé selon l'une quelconque des revendications précédentes, **caractérisé en ce que** le matériau (1) en fils métalliques est évacué par une ouverture dans le dispositif de séparation (5) après la séparation du caoutchouc.
